# EUROPÄISCHE PATENTANMELDUNG

(11) **EP 0 926 004 A2**
(43) Veröffentlichungstag der Anmeldung: **30.06.1999**
(21) Anmeldenummer: 98123705.0
(22) Anmeldetag: 12.12.1998
(51) Int. Cl.: B60Q 1/32

(54) **Vorrichtung zur Beleuchtung eines Vorfeldes eines Fahrzeugteils**

(30) Priorität: 20.12.1997 DE 19757085
(71) Anmelder: Hella KG Hueck & Co., 59552 Lippstadt (DE)
(72) Erfinder: Blanke, André, 59555 Lippstadt (DE); Damasky, Joachim Dr., 33449 Langenberg (DE); Giepen, Bernd, 59597 Erwitte (DE); Henneböhle, Klaus, 33142 Büren (DE); Korff, Detlef, 59557 Lippenstadt (DE); Merkelbach, Frank Dr., 59597 Erwitte (DE)

(57) **Zusammenfassung**

Die Erfindung betrifft eine Vorrichtung zur Beleuchtung eines Vorfeldes eines Fahrzeugteils mit einer Lichtquelle, wobei die Lichtquelle (3) über einen Lichtleiter (4) mit einem Lichtauskoppelelement (5) verbunden ist, daß das Lichtauskoppelelement (5) im wesentlichen auf einer Innenseite (6) einer Fahrzeugaußenhaut angeordnet ist, wobei die Fahrzeugaußenhaut einen Durchlaß (12) aufweist, und daß ein Endabschnitt (15) des Lichtauskoppelelements (5) derart mit dem Durchlaß (12) zusammenwirkt, daß die Lichtstrahlen von dem Lichtauskoppelelement (5) in Richtung des Fahrbahnbelags abgestrahlt werden.

## Beschreibung

Die Erfindung betrifft eine Vorrichtung zur Beleuchtung eines Vorfeldes eines Fahrzeugteils mit einer Lichtquelle.

Aus der DE-PS 919 691 ist eine Vorrichtung zur Beleuchtung eines Türgriffs eines Kraftfahrzeugs bekannt, wobei eine Lichtquelle in dem nach außen von der Fahrzeugaußenhaut abstehenden Türgriff angeordnet ist. Der Türgriff weist miteinander fluchtende Öffnungen zum Durchlaß von nach vorne und hinten abgestrahltem Licht auf, so daß die Lichtquelle als Stand- oder Parkleuchte dient. Die Unterseite des Türgriffs ist als durchsichtiges Material ausgebildet, so daß ein unterhalb des Türgriffs angeordnetes Türschloß beleuchtet werden kann. Die zusätzliche Beleuchtung eines Vorfeldes eines Fahrzeugteils ist nicht vorgesehen. Nachteilig an der bekannten Vorrichtung ist, daß der Türgriff zur Aufnahme einer Lichtquelle einen von der Handhabe des Türgriffs nach unten weisenden Fußabschnitt aufweisen muß, der wegen der Aufnahme der Lichtquelle großvolumig ausgebildet ist.

Aus der DE 36 35 471 A1 ist eine Vorrichtung zur Beleuchtung eines Vorfeldes eines Fahrzeugteils bekannt, die zur Ausleuchtung des Vorfeldes einer Fahrzeugtür eine Lichtquelle in einem Außenspiegelhalter vorsieht. Die Lichtquelle sendet ein im wesentlichen sich in Längsrichtung des Fahrzeugs erstreckendes Lichtbündel aus. Die Lichtquelle ist gleichzeitig mit der Entriegelung einer Zentralverriegelungseinrichtung des Fahrzeugs über eine Infrarot-Fernbedienung einschaltbar. Nachteilig an der bekannten Vorrichtung ist, daß der Abstand der Lichtquelle zu dem auszuleuchtenden Vorfeld relativ groß ist, so daß die Lichtquelle eine relativ große Leuchtstärke aufweisen muß. Es ist eine relativ großflächige und sichtbare Lichtaustrittsfläche erforderlich, um ein Vorfeld einschließlich des Fahrbahnbelages auszuleuchten.

Aufgabe der vorliegenden Erfindung ist es daher, eine Vorrichtung zur Beleuchtung eines Vorfeldes eines Fahrzeugteils derart auszubilden, daß eine homogene Ausleuchtung des Vorfeldes gewährleistet ist, wobei die Kontur der Fahrzeugaußenhaut im wesentlichen unverändert bleibt.

Zur Lösung dieser Aufgabe ist die Erfindung dadurch gekennzeichnet, daß die Lichtquelle über einen Lichtleiter mit einem Lichtauskoppelelement verbunden ist, daß das Lichtauskoppelelement im wesentlichen auf der Innenseite einer Fahrzeugaußenhaut angeordnet ist, wobei die Fahrzeugaußenhaut einen Durchlaß aufweist, und daß ein Endabschnitt des Lichtauskoppelelements derart mit dem Durchlaß zusammenwirkt, daß die Lichtstrahlen von dem Lichtauskoppelelement in Richtung des Fahrbahnbelags abgestrahlt werden.

Der Vorteil der Erfindung besteht insbesondere darin, daß lediglich ein kleinvolumiges Lichtauskoppelelement zur Abstrahlung des von der Lichtquelle ausgesandten Lichtbündels im Bereich der Fahrzeugaußenhaut angeordnet ist, während die Lichtquelle und ein das Licht zu dem Lichtauskoppelelement hinführender Lichtleiter an einem beliebigen Platz auf der Innenseite der Fahrzeugaußenhaut angeordnet sein können. Durch Verwendung eines flexibel ausgestalteten Lichtleiters kann das Licht an eine beliebige Stelle der Fahrzeugaußenhaut geführt werden, wobei die Lichtstrahlen lediglich durch einen klein dimensionierten Durchlaß der Fahrzeugaußenhaut abgestrahlt werden. Dabei befindet sich der Ort des Durchlasses vorzugsweise in einem von der Umgebung des Fahrzeugteils nach außen abstehenden oder nach innen ausgeformten Bereich des Fahrzeugteils.

Nach einer besonderen Ausführungsform der Erfindung ist das Lichtauskoppelelement im Bereich eines Türgriffs des Fahrzeugs angeordnet. Hierdurch wird eine Beleuchtung des Vorfeldes der Fahrzeugtür ermöglicht, so daß der Einstiegsbereich des Fahrzeuges ausgeleuchtet ist. Zusätzlich ist für die einsteigende Person erkennbar, wo sich der Türgriff befindet. Dadurch, daß sich die Lichtquelle in einem von dem Türgriff entfernten Bereich befindet, tritt keine Wärmeentwicklung im Bereich des Türgriffes auf, so daß das Lichtauskoppelelement relativ platzsparend ausgebildet sein kann.

Nach einer Weiterbildung der Erfindung wirkt das Lichtauskoppelelement mit einem feststehenden Türgriffteil zusammen, wobei das Ende des Lichtauskoppelelements von einem nach außen schwenkbaren beweglichen Türgriffteil verdeckt ist. Hierdurch wird wirksam eine eventuelle Blendung einer Person verhindert. Durch die Anordnung des Lichtauskoppelelements im Bereich des feststehenden Türgriffteils wird eine einfache Montage bzw. Demontage ermöglicht.

Nach einer Weiterbildung der Erfindung ist das Lichtauskoppelelement bezüglich des feststehenden Türgriffteils derart positioniert, daß das Ende des Lichtauskoppelelements an die Außenkontur der Türgriffteile angepaßt ist. Hierdurch wird ein störender Einfluß der Bedienbarkeit bei der Betätigung des Türgriffs vermieden.

Nach einer Weiterbildung der Erfindung weist das Lichtauskoppelelement zwei rechtwinklig zueinander angeordnete Lichtführungssegmente auf, so daß eine einfache Montage bzw. Demontage des Türgriffes zusammen mit dem Lichtauskoppelelement und dem sich anschließenden Lichtleiter ermöglicht wird.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: Eine perspektivische Darstellung der Anordnung eines Lichtauskoppelelementes im Bereich eines Türgriffs eines Fahrzeugs,
- Figur 2: eine rückwärtige Ansicht eines Türgriffs mit dem an dem feststehenden Türgriffteil befestigten Lichtauskoppelelements,
- Figur 3: eine perspektivische Darstellung eines ersten und zweiten Lichtführungssegments des Lichtauskoppelelements,
- Figur 4: einen Querschnitt durch das feststehende Türgriffteil entlang der Linie IV-IV in Figur 2 und
- Figur 5: einen Querschnitt durch das feststehende Türgriffteil entlang der Linie V-V in Figur 2.

Die erfindungsgemäße Vorrichtung zur Beleuchtung eines Vorfeldes eines flächigen Fahrzeugteils ist mit dem platzsparenden Lichtauskoppelelement vorzugsweise in einem nicht ohne weiteres optisch erkennbaren Bereich der Fahrzeugaußenkontur angeordnet. Beispielsweise kann das Lichtauskoppelelement an der Unterseite einer an der Fahrzeugaußenkontur verlaufenden Zierleiste oder im Bereich eines im folgenden beschriebenen Türgriffs angeordnet sein.

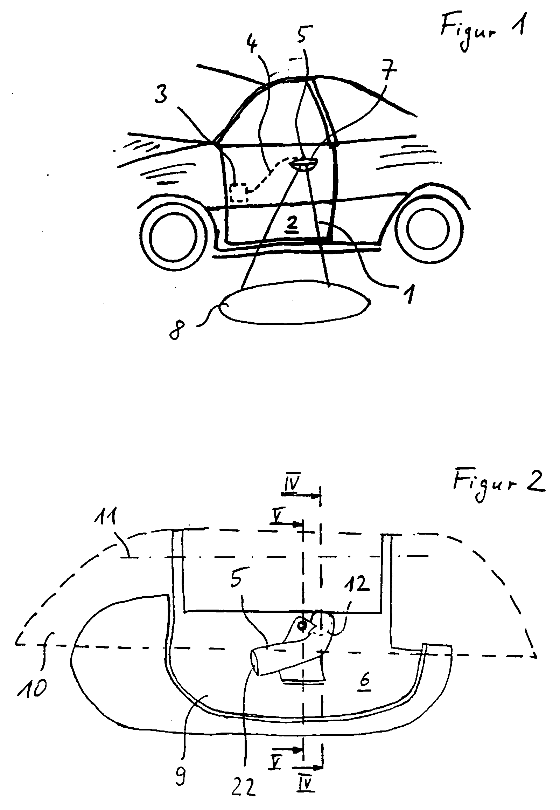

Figur 1 zeigt die erfindungsgemäße Vorrichtung im Bereich einer Fahrzeugtür (1), wobei die Vorrichtung auf der Innenseite einer Türaußenwand (2) angeordnet ist. Eine Lichtquelle (3), die als Glühlampe ausgebildet sein kann, ist in einem einen entsprechenden Bauraum aufweisenden Teil der Fahrzeugtür (1) angeordnet. Mit der Lichtquelle (3) ist ein Lichtleiter (4) verbunden, der das von der Lichtquelle (3) ausgesandte Lichtbündel zu einem Lichtauskoppelelement (5) leitet, das auf einer Innenseite (6) eines in die Fahrzeugtür (1) eingefaßten Türgriffs (7) angeordnet ist. Das Lichtauskoppelelement (5) sendet ein Lichtbündel aus, das ein Vorfeld (8) der Fahrzeugtür (1) ausleuchtet.

Wie aus Figur 2 zu ersehen ist, besteht der Türgriff (7) aus einem feststehenden Türgriffteil (9), an dessen Innenseite (6) das Lichtauskoppelelement (5) befestigt ist. Zur Betätigung des Türgriffs (7) ist ein nach außen hin schwenkbares bewegliches Türgriffteil (10) vorgesehen, das um eine oberhalb des feststehenden Türgriffteils (9) angeordnete horizontale Schwenkachse (11) in eine Betätigungsposition bringbar ist. Der feststehende Türgriffteil (9) weist in einem oberen Bereich eine Öffnung (12) als Durchlaß für das aus dem Lichtauskoppelelement (5) austretende Lichtbündel auf.

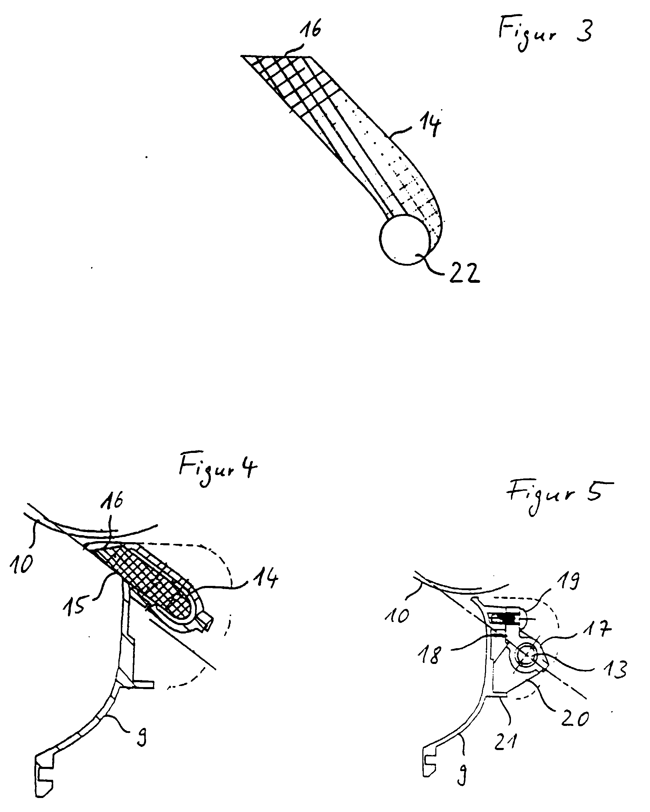

Das Lichtauskoppelelement (5) weist ein sich entlang der Innenseite (6) des Türgriffteils (9) erstreckendes erstes Lichtführungssegment (13) und ein sich an diesem einstückig in einem rechten Winkel anschließendes zweites Lichtführungssegment (14) auf. Das zweite Lichtführungssegment (14) tritt mit einem Endabschnitt (15) desselben durch die Öffnung (12) des feststehenden Türgriffteil (9) durch, wobei sich der Endabschnitt (15) bzw. das zweite Lichtführungssegment (14) etwa in einem Winkel von 45° zu einer Horizontalen nach oben erstreckt. Das freie Ende des Endabschnitts (15) weist eine um einen Winkel von 45° abgeschrägte Stirnfläche (16) auf, die sich als Reflexionsfläche in horizontaler Richtung erstreckt. Wie aus Figur 4 besonders gut zu ersehen ist, erstreckt sich der Endabschnitt (15) in der Betätigungsstellung des beweglichen Türgriffteils (10) in Verlängerung desselben, so daß keine störende Wirkung auf die Bedienbarkeit des Türgriffs (7) ausgeübt wird. Der Endabschnitt (15) ist platzsparend in dem oberen Bereich des feststehenden Türgriffteils (9) angeordnet.

Die zylinderförmig ausgebildeten Lichtführungssegmente (13) und (14) sind in einem Gehäuse (17) aus Kunststoff gehalten, das einen abragenden Befestigungsfinger (18) mit einer Bohrung zur Befestigung an der Innenseite (6) des feststehenden Türgriffteils (9) mittels einer Verschraubung (19) aufweist. Nach unten hin ragen von dem Gehäuse (17) mehrere Stege (20) ab, die zur Anlage mit einer von der Innenseite (6) abragenden Stütznase (21) des Türgriffteils (9) kommen. In einem ersten Schritt wird das Gehäuse (17) unter Anlage der Stege (20) an der korrespondierenden Stütznase (21) angelegt und in einem zweiten Schritt durch Verschraubung (19) an der Innenseite (6) des feststehenden Türgriffteils (9) befestigt. Dies ermöglicht eine einfache und schnelle Montage und Demontage des Lichtauskoppelelements (5) an dem Türgriffteil (9).

Das von der Lichtquelle (3) ausgestrahlte Licht wird über den flexiblen, mit Glas als Übertragungsmedium ausgebildeten Lichtleiter (4) zu einer kreisförmigen Einkoppelfläche (22) des ersten Lichtführungssegments (13) geleitet. Nach einer 90°-Umlenkung wird das Licht an der Stirnfläche (16) des Endabschnitts (15) reflektiert und unter einem Winkel von etwa 45° zu einer Horizontalen in Richtung des Fahrbahnbelags abgestrahlt. Je weiter die Stirnfläche (16) aus dem muldenförmigen Türgriffteil (9) herausragt, desto näher liegt die Hell-/Dunkelgrenze an dem Fahrzeug.

Die Lichtführungssegmente (13), (14) bestehen vorzugsweise aus einem Kunststoffmaterial, insbesondere aus PMMA oder einem transparenten PPC. Zur Verhinderung einer Verschmutzung können die Lichtführungssegmente (13) und (14) mit einer Verdampfungsschicht und einer Schutzlackierung versehen sein.

Die Betätigung der Lichtquelle (3) wird vorzugsweise mit der Entriegelung einer nicht dargestellten Zentralverriegelungseinrichtung des Fahrzeugs gekoppelt, so daß beispielsweise mittels einer Infrarot-Fernbedienung mit Entriegelung des Fahrzeugs das Vorfeld des Fahrzeugs bzw. der Fahrzeugtür (1) beleuchtet wird.

## Patentansprüche

1. Vorrichtung zur Beleuchtung eines Vorfeldes eines Fahrzeugteils mit einer Lichtquelle, dadurch gekennzeichnet, daß die Lichtquelle (3) über einen Lichtleiter (4) mit einem Lichtauskoppelelement (5) verbunden ist, daß das Lichtauskoppelelement (5) im wesentlichen auf einer Innenseite (6) einer Fahrzeugaußenhaut angeordnet ist, wobei die Fahrzeugaußenhaut einen Durchlaß (12) aufweist, und daß ein Endabschnitt (15) des Lichtauskoppelelements (5) derart mit dem Durchlaß (12) zusammenwirkt, daß die Lichtstrahlen von dem Lichtauskoppelelement (5) in Richtung des Fahrbahnbelags abgestrahlt werden.

2. Vorrichtung nach Anspruch 1, dadurch gekennzeichnet, daß das Lichtauskoppelelement (5) auf der Innenseite (6) eines feststehenden Türgriffteils (9) eines Türgriffs (7) angeordnet ist, wobei der feststehende Türgriffteil (9) eine Öffnung (12) als Durchlaß aufweist, durch die sich der Endabschnitt (15) des Lichtauskoppelelements (5) mit einem Ende erstreckt, das derart ausgebildet ist, daß die von dem Lichtauskoppelelement (5) ausgesandten Lichtstrahlen in Richtung des Fahrbahnbelags abgestrahlt werden.

3. Vorrichtung nach Anspruch 1 oder 2, dadurch gekennzeichnet, daß das feststehende Türgriffteil (9) mit einem nach außen hin schwenkbaren beweglichen Türgriffteil (10) zusammenwirkt, wobei zumindest in der Normalposition des beweglichen Türgriffteils (10) das Ende (15) des Lichtauskoppelelements (5) durch das bewegliche Türgriffteil (10) abgedeckt ist.

4. Vorrichtung nach einem der Ansprüche 1 bis 3, dadurch gekennzeichnet, daß das feststehende Türgriffteil (9) als sich in Längsrichtung des Fahrzeugs erstreckende langgestreckte Türgriffmulde ausgebildet ist, die in einem oberen Bereich mindestens eine Öffnung (12) zur Aufnahme des Endabschnitts (15) aufweist.

5. Vorrichtung nach einem der Ansprüche 1 bis 4, dadurch gekennzeichnet, daß der Endabschnitt (15) des Lichtauskoppelelements (5) zylinderförmig ausgebildet ist und sich durch die Öffnung (12) in einem spitzen Winkel zu einer Horizontalen erstreckt und daß die Stirnfläche (16) des Endabschnitts (15) derart abgeschrägt ist, daß die Lichtstrahlen nach unten abgelenkt werden.

6. Vorrichtung nach Anspruch 5, dadurch gekennzeichnet, daß der Endabschnitt (15) sich im wesentlichen in einem Winkel von 45° nach oben erstreckt, wobei die Stirnfläche (16) eine horizontal verlaufende Reflexionsfläche bildet.

7. Vorrichtung nach einem der Ansprüche 1 bis 6, dadurch gekennzeichnet, daß das Lichtauskoppelelement (5) ein sich entlang der Innenseite (6) des feststehenden Türgriffteils (9) erstreckendes erstes Lichtführungssegment (13) und ein sich an diesem rechtwinklig anschließendes zweites Lichtführungssegment (14) aufweist, wobei das zweite Lichtführungssegment (14) den sich durch die Öffnung (12) erstreckenden Endabschnitt (15) aufweist.

8. Vorrichtung nach einem der Ansprüche 1 bis 7, dadurch gekennzeichnet, daß das erste Lichtführungselement (13) und das zweite Lichtführungselement (14) einstückig miteinander verbunden sind und daß die Lichtführungssegmente (13, 14) in einem Gehäuse (17) gelagert sind, das auf der Innenseite (6) des feststehenden Türgriffteils (9) befestigt ist.

9. Vorrichtung nach einem der Ansprüche 1 bis 8, dadurch gekennzeichnet, daß die Lichtführungssegmente (13, 14) aus einem lichtleitenden Kunststoff, insbesondere PMMA, bestehen.

10. Vorrichtung nach einem der Ansprüche 1 bis 9, dadurch gekennzeichnet, daß die Lichtquelle (3) gleichzeitig mit der Entriegelung einer Zentralverriegelungseinrichtung des Fahrzeugs über eine Infrarot-Fernbedienung einschaltbar ist.
